# EUROPEAN PATENT APPLICATION

(11) **EP 4 571 977 A1**
(43) Date of publication of application: **18.06.2025**
(21) Application number: 23903872.2
(22) Date of filing: 05.12.2023
(51) Int. Cl.: H01M 50/251

(54) **ENERGY STORAGE SYSTEM**

(30) Priority: 12.12.2022 KR 20220173092
(71) Applicant: LG Energy Solution, Ltd., Seoul 07335 (KR)
(72) Inventor: YU, Sang-Hyun, Daejeon 34122 (KR); YOON, Han-Ki, Daejeon 34122 (KR); LEE, Da-Been, Daejeon 34122 (KR); LEE, Young-Seok, Daejeon 34122 (KR); JANG, Min-Seok, Daejeon 34122 (KR); JEONG, Chan-Young, Daejeon 34122 (KR); CHO, Young-Bum, Daejeon 34122 (KR)
(74) Representative: BCKIP Part mbB
(86) International application number: PCT/KR2023/019921
(87) International publication number: WO 2024/128669

(57) **Abstract**

An energy storage system according to one aspect of the present disclosure includes a plurality of battery packs including a plurality of battery cells and a pair of side plates covering the plurality of battery cells on both side surfaces; and a battery rack that includes a rack frame facing the side plate to be capable of stacking and accommodating the plurality of battery packs in the vertical direction, wherein the pair of side plates have, on the outer surface, a rail that includes an upper member extending from one end to the other end in the longitudinal direction of the battery pack; and a lower member parallel to the upper member, and the rack frame has a pin protruding in a direction toward the side plate and configured to be located between the upper member and the lower member, so that the pin is inserted between the rails to accommodate the plurality of battery packs.

## Description

### TECHNICAL FIELD

The present disclosure relates to an energy storage system, and more specifically, to an energy storage system capable of reducing weight and cost by applying a new structure to a battery pack and a battery rack that may stack and accommodate the same. The present application claims priority to Korean Patent Application No. 10-2022-0173092 filed on December 12, 2022 in the Republic of Korea, the disclosures of which are incorporated herein by reference.

### BACKGROUND ART

In general, Smart Grid is regarded as a future power grid that optimizes the operation efficiency of the power grid through two-way communication between suppliers and consumers while observing and controlling the power grid in real time by combining information and communication technology with the existing power system. This enables connection with new power devices such as renewable energy generation or charging systems for electric vehicles, which have been increasing recently, and may improve power use efficiency by providing consumers' power use information in real time, thereby expecting to have the effects of reducing unnecessary investment in power generation facilities and lowering greenhouse gas emissions. Recently, interest in smart grids has increased due to issues such as modernization plans for the power grid and expansion of renewable energy, and research on them is actively in progress.

One of the core technologies related to this smart grid is an energy storage system. This is to promote load levelling by storing power during off-peak times and then using the stored electrical energy during peak times. This energy storage system may aid in efficient use of power facilities.

Recently, the development of lithium-ion batteries with high energy storage density has made it possible to construct a high-voltage, large-capacity energy storage system using a chemical energy storage method.

For example, a recent energy storage system may be composed of a battery pack composed of lithium-ion batteries with high energy density and a battery rack capable of stacking and accommodating the battery packs.

Meanwhile, multiple battery packs and a battery rack for accommodating them had no choice but to have significant weight to secure the necessary rigidity. A conventional battery rack has a structure with an L bracket to accommodate battery packs.

However, since the battery pack needs its own rigidity for handling, and the battery rack for stacking and accommodating the battery packs also needs rigidity to support the battery packs, the rigidity may be redundant more than necessary after accommodating the battery pack in the battery rack, thereby causing a problem of increasing the weight and cost.

### DISCLOSURE

### Technical Problem

The present disclosure is designed to solve the problems of the related art, and therefore the present disclosure is directed to providing an energy storage system configured to be capable of reducing weight and cost by applying a new structure to a battery pack and a battery rack that may stack and accommodate the same.

### Technical Solution

An energy storage system according to one aspect of the present disclosure for solving the above-described problem includes a plurality of battery packs including a plurality of battery cells and a pair of side plates covering the plurality of battery cells on both side surfaces; and a battery rack that includes a rack frame facing the side plate to be capable of stacking and accommodating the plurality of battery packs in the vertical direction, wherein the pair of side plates have, on the outer surface, a rail that includes an upper member extending from one end to the other end in the longitudinal direction of the battery pack; and a lower member parallel to the upper member, and the rack frame has a pin protruding in a direction toward the side plate and configured to be located between the upper member and the lower member, so that the pin is inserted between the rails to accommodate the plurality of battery packs.

The plurality of battery packs may further include a front plate covering the front surface of the plurality of battery cells, a rear plate covering the rear surface, and a bottom plate covering the bottom surface.

The rack frame may stand upright along the vertical direction, and may have at least two pins along the longitudinal direction of the battery pack and at least two pins along the width direction of the battery pack.

The rack frame may include at least two main frames along the longitudinal direction of the battery pack and at least two main frames along the width direction of the battery pack.

The rack frame may further include at least one first additional frame between the main frames along the longitudinal direction of the battery pack.

The first additional frame may have the pin.

The rack frame may further include at least one second additional frame between the main frames along the width direction of the battery pack.

The second additional frame may have the pin.

The first additional frame may be located closer to any one of the two main frames located along the longitudinal direction of the battery pack.

The pair of side plates may have a fixing portion located at one end and configured to be caught on the rack frame.

The fixing portion may be coupled to the rack frame by bolting.

The upper member and the lower member may be spaced apart from the one end to the other end.

The pin may include a first part having a first length in the protruding direction and a first height in the cross-section perpendicular to the protruding direction; and a second part connected in the protruding direction from the first part and having a second length in the protruding direction and a second height greater than the first height in the cross-section perpendicular to the protruding direction.

Each of the upper member and the lower member may have a connection portion connected to the side plate, a pin receiving portion protruding outward from the connection portion and configured to form a space for receiving the second part, and a pin catching portion configured to prevent the second part from falling out of the space.

The pin catching portions of the upper member and the lower member may face each other.

The first part may have the first height smaller than a distance between an end of the pin catching portion of the upper member and an end of the pin catching portion of the lower member.

The second part may have the second height greater than a distance between an end of the pin catching portion of the upper member and an end of the pin catching portion of the lower member.

The side plate may include a first cover surface covering the side surface of the plurality of battery cells; and a second cover surface bent from the first cover surface to cover at least a portion of the bottom surface of the plurality of battery cells.

The side plate may be bent multiple times between the first cover surface and the second cover surface.

The fixing portion may extend from the first cover surface and may be bent perpendicularly toward the rack frame.

The first cover surface, the second cover surface, and the fixing portion may be integrally formed.

### Advantageous Effects

According to this configuration of the present disclosure, there is no need to redundantly secure the rigidity of the battery pack itself and the rigidity such as the L bracket of the battery rack for stacking and accommodating the battery packs, as in the conventional energy storage system. The battery pack may be accommodated with a simple structure through the pins of the rack frame and the rails of the battery pack, thereby reducing the weight and cost of the energy storage system.

According to another aspect of the present disclosure, the battery pack is accommodated by at least four main frames and at least two first additional frames. Therefore, the battery pack may be accommodated more stably than when accommodated by only four main frames. In addition, the battery rack may be configured by adjusting the number of first additional frames according to the weight of the battery pack to be accommodated. Since the main frame and the first additional frame are not in the form of a surface closing a space, but in the form of a column, they may aid in cooling the heat generated from the battery pack in an air circulation manner.

According to still another aspect of the present disclosure, the battery rack may accommodate battery packs by arranging and stacking them in two or more stages rather than one stage. The battery rack may be configured in various ways by adjusting the number of second additional frames according to the number of battery packs to be accommodated and the accommodating environment, which increases the possibility of expansion of the energy storage system.

According to still another aspect of the present disclosure, even if the mounting process of the battery pack is not completed, the battery pack is supported by the pins as long as only two pins are inserted into the rails of a pair of side plates, respectively. Therefore, no additional support is required for the battery pack during the mounting process, and the mounting process of the battery pack may be stable and fast.

According to still another aspect of the present disclosure, mounting may be completed by confirming that the fixing portion is caught on the rack frame without considering the extent to which the battery pack is mounted on the battery rack, thereby facilitating the mounting process. In addition, the battery pack may be accommodated more stably by bolting the fixing portion and the rack frame together.

According to still another aspect of the present disclosure, the first part of the pin is stably fitted between an end of the pin catching portion of the upper member and an end of the pin catching portion of the lower member, and the second part of the pin is accommodated in the pin receiving portion, so that the pin may not fall out in the width direction of the battery pack. Therefore, this allows the battery pack to be accommodated stably.

According to still another aspect of the present disclosure, by providing an indented portion and a protrusion on the side plate through a bending structure, other configurations necessary for configuring the battery pack may be provided in the empty space of the indented portion. For example, a cooling passage or a battery management system (BMS) may be provided. The outermost surface of the protrusion is located on the same surface as the outermost surface of the rail, which may guide the battery pack so that the battery pack does not move in the width direction thereof during the mounting process of the battery pack.

In addition, the present disclosure may have various other effects, which will be described in each embodiment, or descriptions of effects that may be easily understood by those skilled in the art will be omitted.

### DESCRIPTION OF DRAWINGS

FIG. 1 is a perspective view showing the appearance of an energy storage system according to an embodiment of the present disclosure.
FIG. 2 is an exploded perspective view of an energy storage system according to an embodiment of the present disclosure.
FIG. 3 is a view showing a battery pack included in an energy storage system according to an embodiment of the present disclosure.
FIG. 4 is a view showing a rack frame included in an energy storage system according to an embodiment of the present disclosure.
FIG. 5 is a view showing a rack frame included in an energy storage system according to another embodiment of the present disclosure.
FIG. 6 is a view showing a rack frame included in an energy storage system according to still another embodiment of the present disclosure.
FIG. 7 is an enlarged view of a partial area B of FIG. 3.
FIG. 8 is an enlarged view of a partial area A of FIG. 1.
FIG. 9 is a view showing in detail a pin in a rack frame included in an energy storage system according to an embodiment of the present disclosure.
FIG. 10 is a view showing a side plate of a battery pack included in an energy storage system according to an embodiment of the present disclosure.
FIG. 11 is a view showing a state in which a battery pack including the side plate of FIG. 10 is mounted on a rack frame included in an energy storage system according to an embodiment of the present disclosure.
FIG. 12 is a view showing a side plate of a battery pack included in an energy storage system according to still another embodiment of the present disclosure.

### BEST MODE

Hereinafter, preferred embodiments of the present disclosure will be described in detail with reference to the accompanying drawings. Since the accompanying drawings in this specification illustrate preferred embodiments of the present disclosure, and together with the detailed description of the present disclosure described later, serve to further understand the technical aspects of the present disclosure, the present disclosure should not be construed as limited to what is shown in such drawings. The same reference numerals refer to the same components. Also, in the drawings, the thickness, ratio, and dimensions of the components may be exaggerated for effective description of the technical content.

The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terms indicating directions as used herein such as upper, lower, left, right, front, and rear are used for convenience of description only, and it is obvious to those skilled in the art that the terms may vary depending on the position of a reference object or an observer.

Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

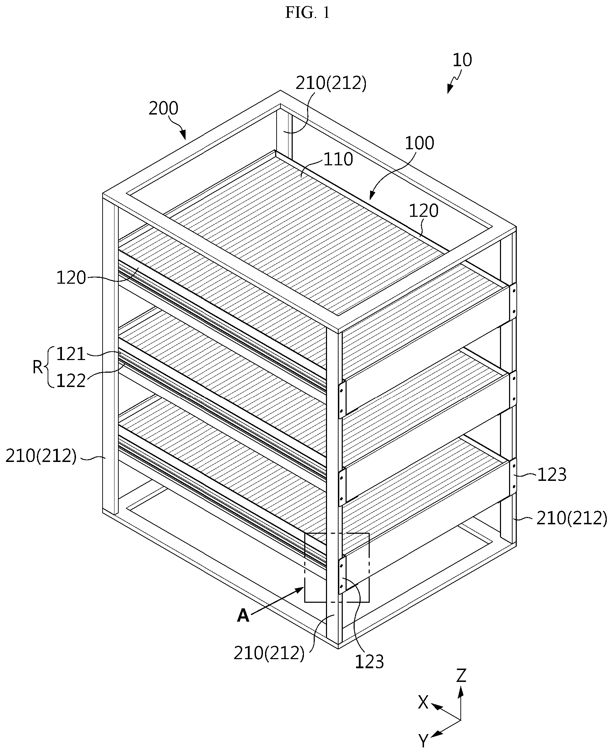

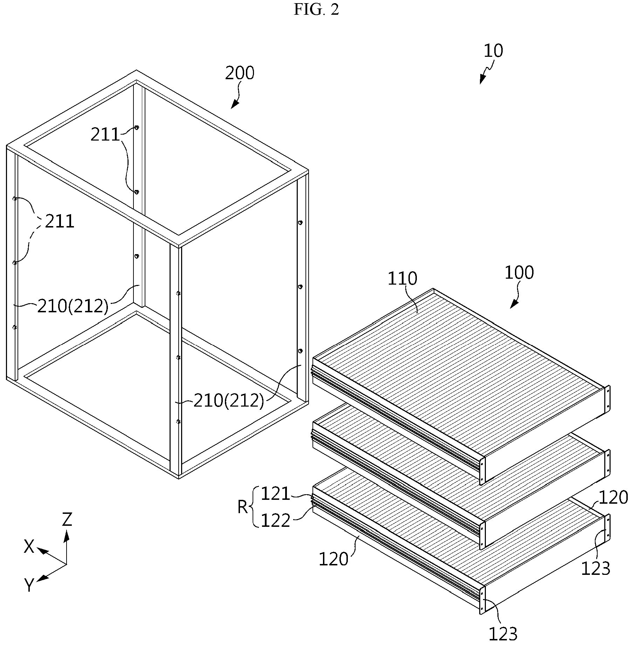

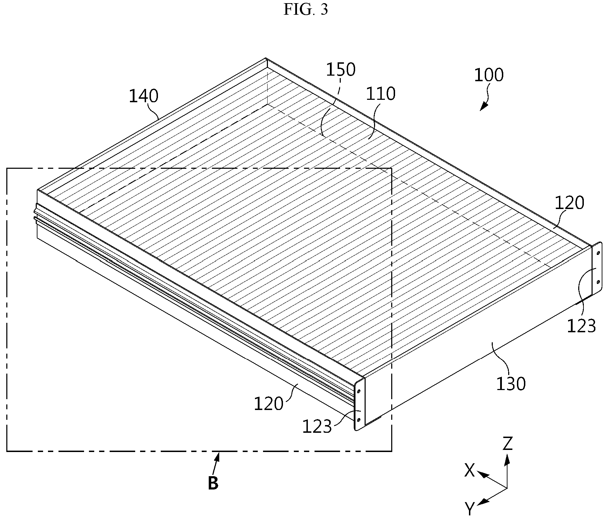

FIG. 1 is a perspective view showing the appearance of an energy storage system according to an embodiment of the present disclosure. FIG. 2 is an exploded perspective view of an energy storage system according to an embodiment of the present disclosure. FIG. 3 is a view showing a battery pack included in an energy storage system according to an embodiment of the present disclosure.

Referring to FIGS. 1 to 3, an energy storage system 10 according to an embodiment of the present disclosure includes a plurality of battery packs 100 and a battery rack 200.

The battery pack 100 may include a plurality of battery cells 110 and a pair of side plates 120 covering the plurality of battery cells 110 on both side surfaces.

Each battery cell in the plurality of battery cells 110 may mean a secondary battery. The secondary battery may include an electrode assembly, an electrolyte, and a battery case. In particular, the battery cell may be a pouch-type secondary battery. However, other forms of a secondary battery, such as a cylindrical battery or a prismatic battery, may also be employed in the battery cell of the present disclosure. The present disclosure is not limited by the specific type or form of this secondary battery, and various forms of secondary batteries known at the time of filing of the present disclosure may be employed in the battery cell of the present disclosure.

The pair of side plates 120 may cover the plurality of battery cells 110 on both side surfaces. The side plate 120 may have a plate shape to cover the side surfaces of the plurality of battery cells 110 along the longitudinal direction (X-axis extension direction) of the plurality of battery cells 110.

In addition, the pair of side plates 120 may have a rail R on the outer surface that includes an upper member 121 extending from one end to the other end in the longitudinal direction (X-axis extension direction) of the battery pack 100 and a lower member 122 parallel to this upper member 121.

As shown in detail in FIG. 3, the battery pack 100 may include a front plate 130 covering the front surface of the plurality of battery cells 110, a rear plate 140 covering the rear surface, and a bottom plate 150 covering the bottom surface, in addition to the side plates 120 covering the side surfaces of the plurality of battery cells 110. The side plates 120, the front plate 130, the rear plate 140, and the bottom plate 150 serve as an enclosure of the battery pack 100 and may be integrally formed. The top surface of the plurality of battery cells 110 may be left uncovered to allow heat to be radiated to the outside of the battery pack 100 when heat is generated in the battery cells 110, and to make the battery pack 100 lightweight.

The side plates 120, the front plate 130, the rear plate 140, and the bottom plate 150 may be configured to be at least partially integrally formed with each other. The side plates 120, the front plate 130, the rear plate 140, and the bottom plate 150 may be manufactured separately and then coupled to each other by welding, bolting, or the like.

The side plates 120 may be made of metal such as steel or aluminum to secure rigidity, and the front plate 130, the rear plate 140, and the bottom plate 150 may be made of a plastic injection molded material to reduce weight. However, the present disclosure is not limited to these materials.

It should be noted that the present disclosure is characterized in that a structure for mounting the battery rack 200 is integrated into the side plates 120 forming the enclosure of the battery pack 100, and includes a rail R as a specific embodiment of the structure for mounting.

The battery rack 200 may include a rack frame 210 facing the side plates 120 to stack and accommodate a plurality of battery packs 100 in the vertical direction (Z-axis extension direction). The battery rack 200 may stack and accommodate the plurality of battery packs 100 in two or more rows as well as in one row. The battery rack 200 may stack and accommodate the battery packs 100 in a desired arrangement of two or more rows by attaching unit structures that stack and accommodate the battery packs 100 in one row vertically and/or horizontally. Accordingly, the possibility of expansion of the energy storage system 10 may be increased.

The rack frame 210 includes pins 211 protruding in a direction toward the side plate 120 and configured to be located between the upper member 121 and the lower member 122, so that the pins 211 may be inserted between the rails R to accommodate the plurality of battery packs 100. In the illustrated example, the pins 211 of the rack frame 210 located at the left side of the battery pack 100 protrude in the negative Y-axis direction, and the pins 211 of the rack frame 210 located at the right side of the battery pack 100 protrude in the positive Y-axis direction. The rack frame 210 stands upright along the vertical direction (Z-axis extension direction) and may have at least two pins 211 along the longitudinal direction of the battery pack 100 and at least two pins 211 along the width direction of the battery pack 100. The four pins 211 are inserted into both ends of the rails R of the pair of side plates 120, respectively, so that the battery pack 100 may be accommodated in the rack frame 210. The battery pack 100 may be accommodated by allowing the upper portion of the pin 211 and the upper member 121 to contact each other and withstand gravity due to its weight. The lower member 122, together with the upper member 121, may prevent the battery pack 100 from shaking in the vertical direction (Z-axis extension direction) due to vibration or the like.

According to this configuration of the present disclosure, there is no need to redundantly secure the rigidity of the battery pack 100 itself and the rigidity of the L bracket of the battery rack 200 for stacking and accommodating the battery pack 100, as in the conventional energy storage system. The battery pack 100 may be accommodated with a simple structure through the pins 211 of the rack frame 210 and the rails R of the battery pack 100, thereby reducing the weight and cost of the energy storage system 10.

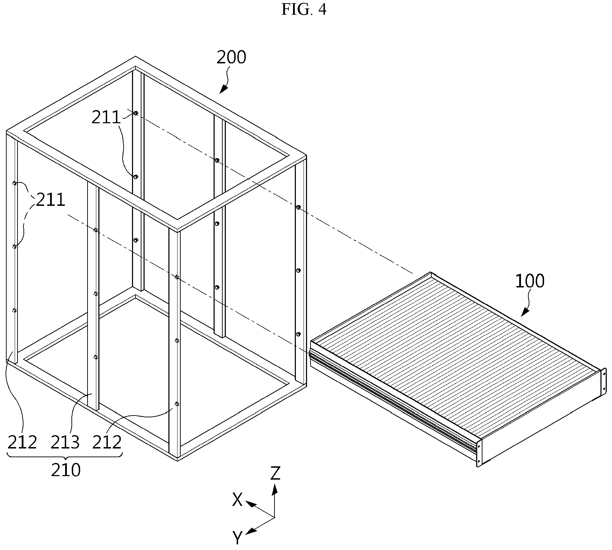

The rack frame 210 included in the energy storage system 10 according to an embodiment of the present disclosure is characterized in that it does not require a separate structure such as a conventional L bracket and is provided with pins 211 to mount the battery pack 100 as described above, but may be configured in various ways, which will be described in detail with reference to FIGS. 4 to 6 as follows.

FIG. 4 is a view showing a rack frame included in an energy storage system according to an embodiment of the present disclosure.

Referring to FIG. 4, the rack frame 210 may include at least two main frames 212 along the longitudinal direction of the battery pack 100 and at least two main frames 212 along the width direction of the battery pack 100. Accordingly, the four main frames 212 may be located at both ends of both side surfaces of the battery pack 100, respectively. As shown, additional members may be further provided at the upper end and lower end of the main frames 212 so that the four main frames 212 may be fixed in an upright state.

The rack frame 210 may further include at least two first additional frames 213 between the main frames 212 along the longitudinal direction of the battery pack 100. That is, at least two first additional frames 213 may be further included by further including at least one first additional frame 213 between the two main frames 212 located on the left side of the battery pack 100 and at least one first additional frame 213 between the frames 212 located on the right side of the battery pack 100. The first additional frame 213 may be located approximately in the middle of the two main frames 212 located along the longitudinal direction of the battery pack 100. The first additional frame 213 may include pins 211 like the main frames 212.

According to this configuration of the present disclosure, the battery pack 100 is accommodated by at least four main frames 212 and at least two first additional frames 213. Therefore, the battery pack 100 may be accommodated more stably than when accommodated by only four main frames 212. In addition, the battery rack may be configured in various ways by adjusting the number of first additional frames 213 according to the weight of the battery pack 100 to be accommodated. Since the main frame 212 and the first additional frame 213 are not in the form of a surface closing a space, but in the form of a column, they may aid in cooling the heat generated from the battery pack 100 in an air circulation manner.

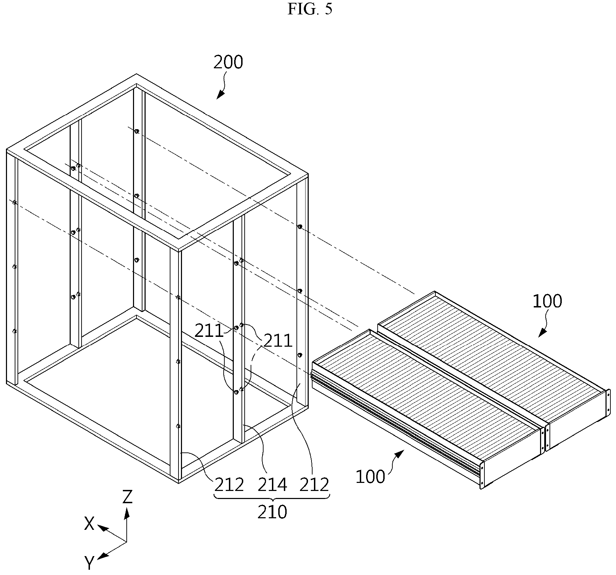

FIG. 5 is a view showing a rack frame included in an energy storage system according to another embodiment of the present disclosure.

Referring to FIG. 5, the rack frame 210 may further include at least two second additional frames 214 between the main frames 212 along the width direction (Y-axis extension direction) of the battery pack 100. That is, at least two second additional frames 214 may be further included by further including at least one second additional frame 214 between the two main frames 212 located at the rear of the battery pack 100 and at least one second additional frame 214 between the two main frames 212 located at the front of the battery pack 100. The second additional frame 214 may be located approximately in the middle of the two main frames 212 located along the width direction of the battery pack 100. The second additional frame 214 may also include pins 211 like the first additional frame 213 or the main frames 212.

According to this configuration of the present disclosure, the battery rack 200 may accommodate the battery packs 100 by arranging and stacking them in two or more stages rather than one stage. The battery rack 200 may be configured in various ways by adjusting the number of second additional frames 214 according to the number of battery packs 100 to be accommodated and the accommodating environment, which increases the possibility of expansion of the energy storage system 10.

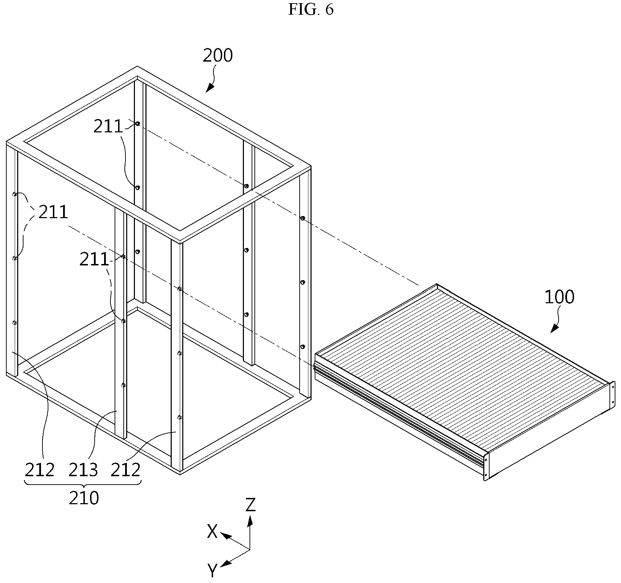

FIG. 6 is a view showing a rack frame included in an energy storage system according to still another embodiment of the present disclosure.

Referring to FIG. 6, the first additional frame 213 may be located closer to any one of the two main frames 212 located along the longitudinal direction of the battery pack 100. Hereinafter, the process and method of mounting the battery pack 100 on the battery rack 200 will be described. Mounting of the battery pack 100 begins by inserting the pins 211 provided in the two main frames 212 at the front thereof located side by side along the width direction of the battery pack 100 into the rails R of a pair of side plates 120, respectively. Once the pins 211 are respectively inserted into the rails R of the pair of side plates 120, the battery pack 100 is pushed rearward, and a pin 211, which is provided in the first additional frame 213 located along the longitudinal direction of the battery pack 100 and has the same height as the pin 211 already inserted into the rail R, is further inserted into the rail R to proceed with mounting. Then, a pin 211, which is provided in the remaining rear main frame 212 and has the same height as the pin 211 already inserted into the rail R, is also inserted into the rail R to complete mounting. The first additional frame 213 may be located closer to the main frame 212 (the main frame located in the negative X-axis direction, that is, the main frame located in the front) where mounting begins among the main frames 212.

According to this configuration of the present disclosure, even if the mounting process of the battery pack 100 is not completed, the battery pack 100 is supported by the pins 211 as long as only two pins 211 are inserted into the rails R of a pair of side plates 120, respectively. Therefore, no additional support is required for the battery pack 100 during the mounting process, and the mounting process of the battery pack 100 may be stable and fast.

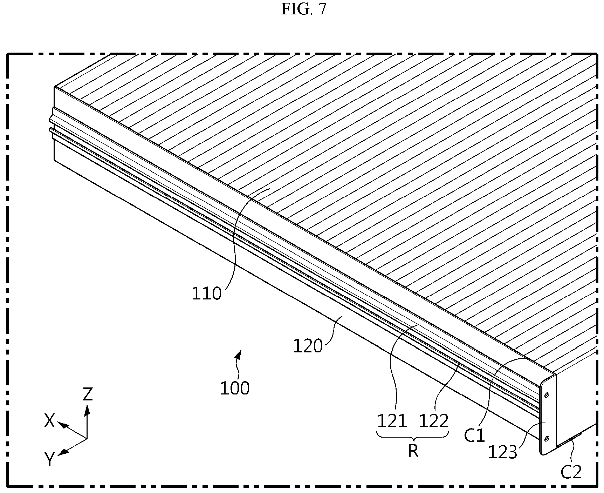

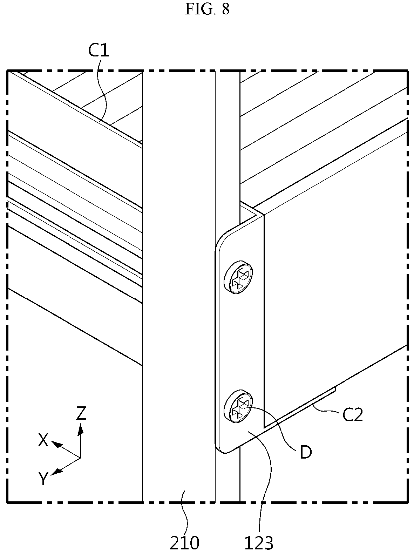

In addition, the battery pack 100 included in the energy storage system 10 according to an embodiment of the present disclosure is characterized in that it is provided with rails R to be mounted on the battery rack 200 as described above, but may be configured in various ways, which will be described in detail with reference to FIGS. 7 and 8 as follows.

FIG. 7 is an enlarged view of a partial area B of FIG. 3. FIG. 8 is an enlarged view of a partial area A of FIG. 1.

Referring to FIGS. 7 and 8, the pair of side plates 120 may have a fixing portion 123 located at one end and configured to be caught on the rack frame 210. The fixing portion 123 may be a part bent and extended from one end of the side plate 120 in a direction toward the rack frame 210 (positive Y-axis direction). The one end may be opposite (an end located in the negative X-axis direction) to the end (an end located in the positive X-axis direction) where mounting begins in the mounting process of the battery pack 100 described above. In the process of mounting the battery pack 100 along the longitudinal direction, the fixing portion 123 is caught on the rack frame 210, so that mounting may be completed. The fixing portion 123 may be coupled to the rack frame 210 by bolting. After the fixing portion 123 is caught on the rack frame 210 to complete mounting, the fixing portion 123 and the rack frame 210 may be coupled by bolts D.

The pair of side plates 120 may include a first cover surface C1 covering the side surface of the plurality of battery cells 110; and a second cover surface C2 bent from the first cover surface C1 to cover at least a portion of the bottom surface of the plurality of battery cells 110. The first cover surface C1, the second cover surface C2, and the fixing portion 123 may be integrally formed. The first cover surface C1, the second cover surface C2, and the fixing portion 123 may be configured to be at least partially integrally formed with each other. The first cover surface C1, the second cover surface C2, and the fixing portion 123 may be manufactured separately and then coupled to each other by welding, bolting, or the like.

According to this configuration of the present disclosure, mounting may be completed by confirming that the fixing portion 123 is caught on the rack frame 210 without considering the extent to which the battery pack 100 is mounted on the battery rack 200, thereby facilitating the mounting process. In addition, the battery pack 100 may be accommodated more stably by bolting the fixing portion 123 and the rack frame 210 together.

Referring to FIG. 7, the upper member 121 and the lower member 122 may be spaced apart from one end to the other end. The upper member 121 and the lower member 122 may be spaced apart from one end to the other end to maintain a predetermined interval between them. Referring to FIG. 2 together, the predetermined interval may correspond to the size of the pin 211.

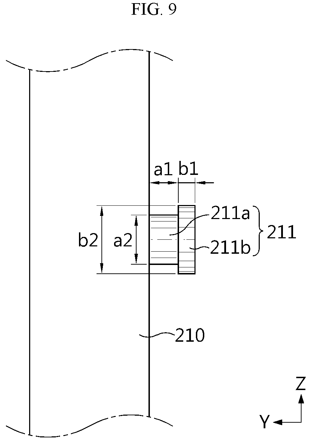

FIG. 9 is a view showing in detail a pin in a rack frame included in an energy storage system according to an embodiment of the present disclosure.

Referring to FIG. 9, the pin 211 may include a first part 211a and a second part 211b. The first part 211a and the second part 211b may be integrally formed. The first part 211a and the second part 211b may be configured to be at least partially integrally formed with each other. The first part 211a and the second part 211b may be manufactured separately and then coupled to each other by welding, bolting, or the like.

The first part 211a of the pin 211 may have a first length a1 in a direction protruding toward the side plate 120 (negative Y-axis direction) and a first height a2 in a cross-section (a surface parallel to the XZ plane) perpendicular to the protruding direction. The first part 211a may be a cylinder whose base is a circle with the first height a2 as its diameter and whose height is the first length a1.

The second part 211b of the pin 211 may be connected in the protruding direction (negative Y-axis direction) from the first part 211a and may have a second length b1 in the protruding direction and a second height b2 greater than the first height a2 in a cross-section (a surface parallel to the XZ plane) perpendicular to the protruding direction. The second part 211b may be a cylinder whose base is a circle with the second height b2 as its diameter and whose height is the second length b1.

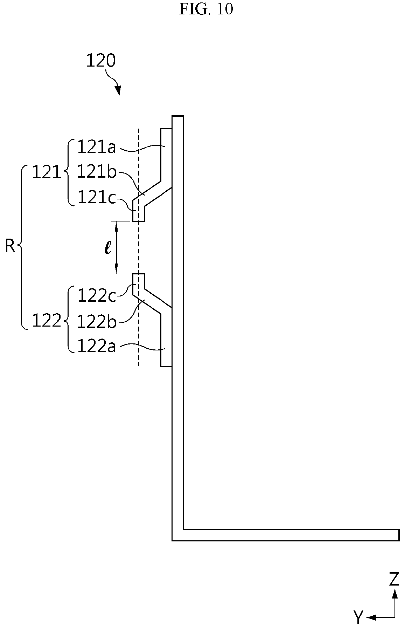

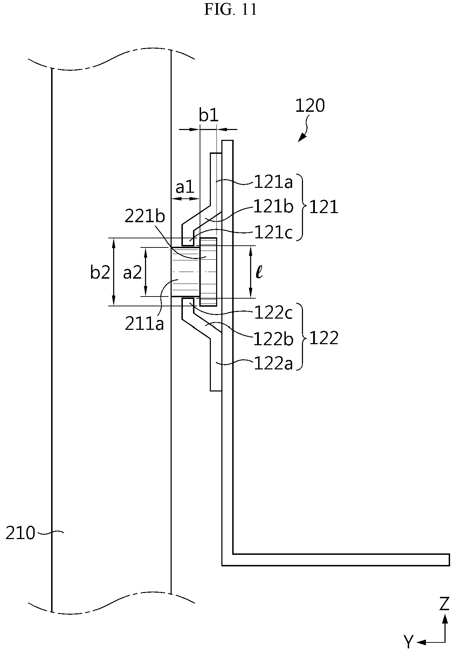

FIG. 10 is a view showing a side plate of a battery pack included in an energy storage system according to an embodiment of the present disclosure. FIG. 11 is a view showing a state in which a battery pack including the side plate of FIG. 10 is mounted on a rack frame included in an energy storage system according to an embodiment of the present disclosure.

Referring to FIGS. 10 and 11, each of the upper member 121 and the lower member 122 may have connection portions 121a, 122a, pin receiving portions 121b, 122b, and pin catching portions 121c, 122c. The connection portions 121a, 122a, the pin receiving portions 121b, 122b, and the pin catching portions 121c, 122c may be integrally formed. The connection portions 121a, 122a, the pin receiving portions 121b, 122b, and the pin catching portions 121c, 122c may be configured to be at least partially integrally formed with each other. The connection portions 121a, 122a, the pin receiving portions 121b, 122b, and the pin catching portions 121c, 122c may be manufactured separately and then coupled to each other by welding, bolting, or the like.

The connection portions 121a, 122a may be connected to the side plate 120. The connection portions 121a, 122a are parts connected to the side plate 120, have a roughly plate shape, and may be connected to the side plate 120 by welding, bolting, or the like.

The pin receiving portions 121b, 122b may be configured to protrude outward (positive Y-axis direction) from the connection portions 121a, 122a to form a space for receiving the second part 211b of the pin 211. The pin receiving portions 121b, 122b may extend from the connection portions 121a, 122a and be formed to be bent at approximately 45 degrees. However, the present disclosure is not limited to this shape of the pin receiving portions 121b, 122b, and may be configured to be bent at approximately 90 degrees to form a space for receiving the second part 211b of the pin 211.

The pin catching portions 121c, 122c may be configured to prevent the second part 211b of the pin 211 from falling out of the space formed by the pin receiving portions 121b, 122b. The pin catching portions 121c, 122c may be configured to extend from the pin receiving portions 121b, 122b to prevent the pins 211 from moving and falling out in the width direction of the battery pack 100, in the illustrated example, in the positive Y-axis direction.

In the case where the first part 211a of the pin 211 is a cylinder whose base is a circle with the first height a2 as its diameter and whose height is the first length a1, and the second part 211b of the pin 211 is a cylinder whose base is a circle with the second height b2 as its diameter and whose height is the second length b1, the remaining area of the left cylindrical surface of the second part 211b of the pin 211 except for the right cylindrical surface of the first part 211a may be caught by the pin catching portions 121c, 122c to be prevented from falling out in the Y-axis direction. However, the present disclosure is not limited in this way to the shape of the first part 211a, the second part 211b, and the pin catching portions 121c, 122c of the pin 211, and the above shape is only an embodiment for describing what is configured to prevent the pin 211 from falling out by the pin catching portions 121c, 122c.

The pin catching portion 121c of the upper member 121 and the pin catching portion 122c of the lower member 122 may face each other. They may be located on the same line so as to face each other in the Z-axis direction.

The first part 211a of the pin 211 may have a first height a2 smaller than a distance l between an end of the pin catching portion 121c of the upper member 121 and an end of the pin catching portion 122c of the lower member 122. Referring to FIG. 4 together, the battery pack 100 moves from front to rear in the X-axis direction, so that the first part 211a may be inserted between the end of the pin catching portion 121c of the upper member 121 and the end of the pin catching portion 122c of the lower member 122 to start the mounting process.

The second part 211b of the pin 211 may have a second height b2 greater than a distance l between the end of the pin catching portion 121c of the upper member 121 and the end of the pin catching portion 122c of the lower member 122. When the second part 211b of the pin 211 moves in the width direction of the battery pack 100, in the illustrated example, in the positive Y-axis direction, it may be caught in the pin catching portions 121c, 122c.

According to this configuration of the present disclosure, the first part 211a of the pin 211 is stably inserted between the end of the pin catching portion 121c of the upper member 121 and the end of the pin catching portion 122c of the lower member 122, and the second part 211b of the pin 211 is received in the pin receiving portions 121b, 122b, so that the pin 211 may not fall out of the rail R in the width direction of the battery pack 100. Therefore, this allows the battery pack 100 to be accommodated stably.

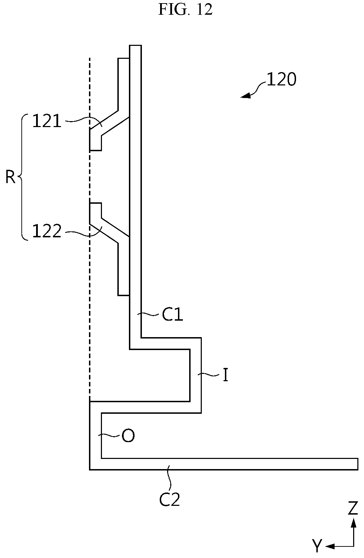

FIG. 12 is a view showing a side plate of a battery pack included in an energy storage system according to still another embodiment of the present disclosure.

Referring to FIG. 12, the side plate 120 may include a first cover surface C1 covering the side surface of the plurality of battery cells and a second cover surface C2 covering the surface bent from the first cover surface C1 to cover at least a portion of the bottom surface of the plurality of battery cells. The side plate 120 may be bent multiple times between the first cover surface C1 and the second cover surface C2. For example, it may be formed by bending five times at an angle of approximately 90 degrees. The structure formed by bending a plurality of times may include an indented portion I that is indented in the negative Y-axis direction and a protrusion O that protrudes in the positive Y-axis direction. The outermost surface of the protrusion O in the Y-axis direction may be located on the same surface (a surface parallel to the XZ plane) as the outermost surface of the rail R in the Y-axis direction.

According to this structure of the present disclosure, other configurations necessary for constructing the battery pack 100 may be provided in the empty space of the indented portion I. For example, a cooling passage or a battery management system (BMS) may be provided. The outermost surface of the protrusion O is located on the same surface as the outermost surface of the rail R, which may guide the battery pack 100 so that the battery pack 100 does not move in the width direction thereof, in the illustrated example, in the Y-axis direction during the mounting process of the battery pack 100.

Although not directly shown in the drawings, referring to FIG. 12 together with FIGS. 7 and 8, where other embodiments are shown, the fixing portion 123 may extend from the first cover surface C1 and may be bent perpendicularly toward the rack frame 210 (in the positive Y-axis direction). The first cover surface C1, the second cover surface C2, and the fixing portion 123 may be integrally formed. The first cover surface C1, the second cover surface C2, and the fixing portion 123 may be configured to be at least partially integrally formed with each other. The first cover surface C1, the second cover surface C2, and the fixing portion 123 may be manufactured separately and then coupled to each other by welding, bolting, or the like.

The present disclosure has been described hereinabove mainly with preferred embodiments with reference to the accompanying drawings, but it is apparent to those skilled in the art that many and various obvious modifications are possible from this description without departing from the scope of the present disclosure. Therefore, the scope of the present disclosure should be construed by the claims which are written to include examples of such many modifications.

### [Explanation of Reference Signs]

10: energy storage system
100: battery pack
110: battery cell
120: side plate
121: upper member
121a: upper member connection portion
121b: upper member pin receiving portion
121c: upper member pin catching portion
122: lower member
122a: lower member connection portion
122b: lower member pin receiving portion
122c: lower member pin catching portion
123: fixing portion
130: front plate
140: rear plate
150: bottom plate
210: rack frame
200: battery rack
211: pin
211a: first part
a1: first length
a2: first height
211b: second part
b1: second length
b2: second height
212: main frame
213: first additional frame
214: second additional frame
R: rail
D: bolt
C1: first cover surface
C2: second cover surface
l: distance
I: indented portion
O: protrusion

## Claims

1. An energy storage system, comprising
a plurality of battery packs comprising a plurality of battery cells and a pair of side plates covering the plurality of battery cells on both side surfaces; and
a battery rack that comprises a rack frame facing the side plate to be capable of stacking and accommodating the plurality of battery packs in the vertical direction,
wherein the pair of side plates have, on the outer surface, a rail that comprises an upper member extending from one end to the other end in the longitudinal direction of the battery pack; and a lower member parallel to the upper member, and
the rack frame has a pin protruding in a direction toward the side plate and configured to be located between the upper member and the lower member, so that the pin is inserted between the rails to accommodate the plurality of battery packs.

2. The energy storage system according to claim 1,
wherein the plurality of battery packs further comprise a front plate covering the front surface of the plurality of battery cells, a rear plate covering the rear surface, and a bottom plate covering the bottom surface.

3. The energy storage system according to claim 1,
wherein the rack frame stands upright along the vertical direction, and has at least two pins along the longitudinal direction of the battery pack and at least two pins along the width direction of the battery pack.

4. The energy storage system according to claim 3,
wherein the rack frame comprises at least two main frames along the longitudinal direction of the battery pack and at least two main frames along the width direction of the battery pack.

5. The energy storage system according to claim 4,
wherein the rack frame further comprises at least one first additional frame between the main frames along the longitudinal direction of the battery pack, and
the first additional frame has the pin.

6. The energy storage system according to claim 4,
wherein the rack frame further comprises at least one second additional frame between the main frames along the width direction of the battery pack, and
the second additional frame has the pin.

7. The energy storage system according to claim 5,
wherein the first additional frame is located closer to any one of the two main frames located along the longitudinal direction of the battery pack.

8. The energy storage system according to claim 1,
wherein the pair of side plates have a fixing portion located at one end and configured to be caught on the rack frame.

9. The energy storage system according to claim 8,
wherein the fixing portion is coupled to the rack frame by bolting.

10. The energy storage system according to claim 8,
wherein the upper member and the lower member are spaced apart from the one end to the other end.

11. The energy storage system according to claim 1,
wherein the pin comprises a first part having a first length in the protruding direction and a first height in the cross-section perpendicular to the protruding direction; and a second part connected in the protruding direction from the first part and having a second length in the protruding direction and a second height greater than the first height in the cross-section perpendicular to the protruding direction.

12. The energy storage system according to claim 11,
wherein each of the upper member and the lower member has a connection portion connected to the side plate, a pin receiving portion protruding outward from the connection portion and configured to form a space for receiving the second part, and a pin catching portion configured to prevent the second part from falling out of the space.

13. The energy storage system according to claim 12,
wherein the pin catching portions of the upper member and the lower member face each other.

14. The energy storage system according to claim 12,
wherein the first part has a first height smaller than a distance between an end of the pin catching portion of the upper member and an end of the pin catching portion of the lower member.

15. The energy storage system according to claim 12,
wherein the second part has the second height greater than a distance between an end of the pin catching portion of the upper member and an end of the pin catching portion of the lower member.

16. The energy storage system according to claim 8,
wherein the side plate comprises a first cover surface covering the side surface of the plurality of battery cells; and a second cover surface bent from the first cover surface to cover at least a portion of the bottom surface of the plurality of battery cells.

17. The energy storage system according to claim 16,
wherein the side plate is bent multiple times between the first cover surface and the second cover surface.

18. The energy storage system according to claim 16,
wherein the fixing portion extends from the first cover surface and is bent perpendicularly toward the rack frame.

19. The energy storage system according to claim 18,
wherein the first cover surface, the second cover surface, and the fixing portion are integrally formed.
